# EUROPÄISCHE PATENTSCHRIFT

(11) **EP 0 846 290 B1**
(45) Veröffentlichungstag und Bekanntmachung des Hinweises auf die Patenterteilung: **30.05.2001**
(21) Anmeldenummer: 96934390.4
(22) Anmeldetag: 22.08.1996
(51) Int. Cl.: G06F 11/16, B61L 7/08, B61L 1/20

(54) **EINRICHTUNG ZUR EINKANALIGEN ÜBERTRAGUNG VON AUS ZWEI DATENQUELLEN STAMMENDEN DATEN**
DEVICE FOR SINGLE-CHANNEL TRANSMISSION OF DATA FROM TWO SOURCES
DISPOSITIF DE TRANSMISSION A UNE SEULE VOIE DE DONNEES PROVENANT DE DEUX SOURCES DE DONNEES

(30) Priorität: 23.08.1995 DE 19532639
(43) Veröffentlichungstag der Anmeldung: 10.06.1998
(73) Patentinhaber: SIEMENS AKTIENGESELLSCHAFT, 80333 München (DE)
(72) Erfinder: PETERS, Harald, D-38124 Braunschweig (DE)
(86) Internationale Anmeldenummer: DE9601595
(87) Internationale Veröffentlichungsnummer: WO9708617

(56) Entgegenhaltungen:
- EP-A- 0 287 302
- DE-A- 3 013 126
- DE-B- 2 912 928
- DE-C- 3 040 080
- SIGNAL UND DRAHT, APRIL 1987, Bd. 79, Nr. 4, April 1987, DARMSTADT,DE, Seiten 81-85, XP002024471 EUE W ET AL: "SIMIS-C-- Die Kompaktversion des Sicheren Mikrocomputer-systems SIMIS"

## Beschreibung

Die Erfindung bezieht sich auf eine Einrichtung nach dem Oberbegriff des Patentanspruches 1 bzw. 2.

Aus der DE-AS 29 12 928 ist eine Einrichtung zur einkanaligen Übermittlung von binär kodierten Informationen für die Fernsteuerung einer eisenbahnsignaltechnischen Anlage von einer Zentrale aus bekannt, bei der zwei parallel betriebene Verarbeitungseinrichtungen über einen Schalter abwechselnd auf einen gemeinsamen Übertragungskanal zu einer Datensenke speisen. Die Verarbeitungseinrichtungen, die beispielsweise als Mikrocomputer ausgebildet sein können, verarbeiten die gleichen Eingangsdaten nach den gleichen Gesetzmäßigkeiten, so daß sie an ihren Ausgängen - ordnungsgerechtes Funktionsverhalten vorausgesetzt - gleiche Ausgangsdaten führen. Etwaige Datenabweichungen werden durch laufenden internen Vergleich der verarbeiteten Daten erkannt; hierzu unterrichten sich die beiden Datenverarbeitungseinrichtungen laufend über die auf ihren internen Datenbussen liegenden Daten. Die beiden Verarbeitungseinrichtungen geben die von ihnen erarbeiteten, inhaltlich übereinstimmenden Daten abwechselnd als Datentelegramme zusammen mit einem für die jeweilige Verarbeitungseinrichtung charakteristischen Kennzeichen oder in einer für die Bearbeitungseinrichtung charakteristischen Form aus. Empfangsseitig ist damit erkennbar, ob die übermittelten Daten abwechselnd von der einen und von der anderen Verarbeitungseinrichtung aufgeschaltet werden. Bleibt der Schalter störungsbedingt hängen, so ist dies empfangsseitig durch das Ausbleiben eines der beiden Kennzeichen erkennbar, und die übermittelten Daten dürfen nicht mehr für sicherheitskritische Anwendungen herangezogen werden. Um Übertragungsstörungen auf dem Übertragungskanal selbst zu erkennen, können die übermittelten Daten in bekannter Weise mit aus den Nutzdaten abgeleiteten Prüfdaten versehen werden, wobei auf der Empfangsseite die übermittelten Prüfdaten mit dort aus den übermittelten Nutzdaten nachgebildeten Prüfdaten verglichen werden.

Die bekannte Einrichtung zur einkanaligen signaltechnisch sicheren Übermittlung von Daten benötigt neben einem Umschalter für das wechselweise Aufschalten der beiden Verarbeitungseinrichtungen zwingend an beiden Verarbeitungseinrichtungen Ausgabekanäle, über die die rechnerspezifisch erarbeiteten Daten auf den Übertragungskanal zu legen sind. Diese Ausgabekanäle, die meist in integrierter Technik ausgeführt sind, haben ein gewisses Ausfallverhalten, das aber regelmäßig nicht bekannt ist. Etwaige Fehler, die durch fehlerhaft arbeitende Ausgaberegister bedingt sind, sind empfangsseitig zwar erkennbar; das Erkennen solcher Fehler ist aber zuverlässig erst mit der Übermittlung von von beiden Verarbeitungseinrichtungen stammenden Daten möglich. Aus diesem Grunde dürfen sicherheitskritische Daten, die sich unterscheiden von den zuvor übermittelten Daten, empfangsseitig erst dann weiterverarbeitet werden, wenn sie in mindestens zwei aufeinanderfolgenden Übertragungszyklen übereinstimmen.

Aus der EP 0 287 302 A2 ist eine zwei Rechner aufweisende Prüfschaltung zum Prüfen digitaler Ausgangsdaten und digitaler Prüfdaten bekannt, bei der der eine Rechner die von ihm erarbeiteten Nutzdaten mit den entsprechenden Nutzdaten des anderen Rechners und der andere die an ihm erarbeiteten Prüfdaten mit den entsprechenden Prüfdaten des einen Rechners auf Übereinstimmung vergleicht. Bei positiven Vergleichsergebnissen schaltet einer der Rechner die Nutzdaten auf einen ersten Übertragungskanal zu einem Datenempfänger, während der andere die Prüfdaten auf einen zweiten Übertragungskanal zum Datenempfänger schaltet. Dieser bildet aus den über den ersten Übertragungskanal empfangenen Nutzdaten die zugehörigen Prüfdaten, vergleicht sie mit den ihm auf dem zweiten Übertragungskanal übermittelten Prüfdaten und anerkennt die übermittelten Nutzdaten nur dann, wenn die selbst ermittelten Prüfdaten mit den übermittelten Prüfdaten übereinstimmen.

In Signal + Draht 79(1987)4, Seiten 81 bis 85 wird über das sichere Mikrocomputersystem SIMIS berichtet. Dieses besteht aus zwei die gleichen Eingangsdaten in identischer Weise verarbeitenden identischen Mikrocomputern, die sich ständig gegenseitig auf Gleichlauf überprüfen. Beide Mikrocomputer wirken über gesonderte Ausgabekanäle auf den oder die zu steuernden Verbraucher ein. Die Problematik von Nutz- und daraus abgeleiteten Prüfdaten zum Erkennen von Speicher- und Übertragungsfehlern wird in Signal + Draht nicht angesprochen.

Aufgabe der vorliegenden Erfindung ist es, eine Einrichtung nach dem Oberbegriff des Patentanspruches 1 bzw. 2 anzugeben, bei der empfangsseitig etwaige Fehler, die auf ein fehlerhaft arbeitendes Ausgaberegister oder eine Übertragungsstörung zurückzuführen sind, nach einmaliger Datenübertragung über nur einen einzigen Übertragungskanal erkennbar sind.

Die Erfindung löst diese Aufgabe durch die kennzeichnenden Merkmale des Patentanspruches 1 bzw. 2. Die erfinderische Idee liegt darin, daß von den die Daten parallel bereitstellenden Verarbeitungseinrichtungen nur eine die Daten ausgibt und auf den Übertragungskanal schaltet, daß aber an der Bereitstellung dieser Daten beide Datenverarbeitungseinrichtungen beteiligt sind. Der besondere Vorteil einer solchen Einrichtung besteht darin, daß lediglich einer der sendeseitigen Rechner/Rechnerkanäle mit einem Ausgabekanal zu versehen ist.

Die Erfindung ist nachstehend anhand eines in der Zeichnung dargestellten Ausführungsbeispieles näher erläutert. Die Zeichnung zeigt in
- Figur 1: in schematischer Weise den Aufbau der Datenübertragungseinrichtung und in
- Figur 2: das Zusammenwirken der zweikanaligen Datenquelle bei der Bereitstellung einkanalig zu übertragender Daten.

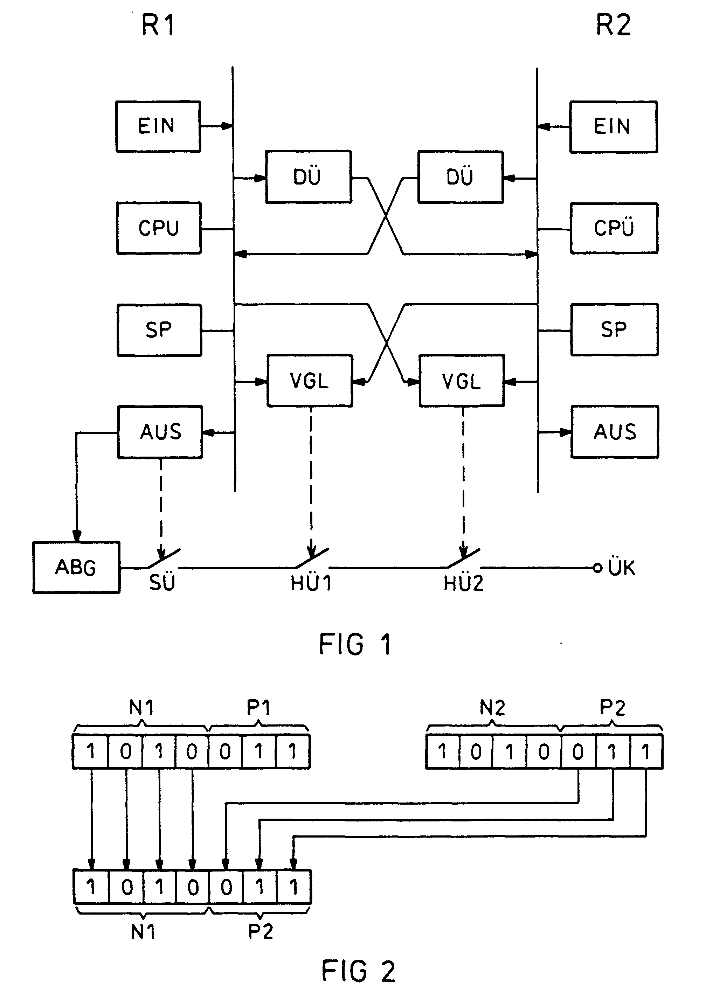

Figur 1 zeigt schematisch ein aus zwei Rechnerkanälen R1, R2 bestehendes Rechnersystem, das dazu dient, ihm zugeführte Eingangsdaten nach gleichen Verarbeitungsprogrammen in Ausgangsdaten umzusetzen und über nur einen einzigen Übertragungskanal ÜK auszugeben. In beiden Rechnerkanälen gibt es Eingänge EIN für Meldungen und Befehle, eine zentrale Verarbeitungseinrichtung CPU, Speicher SP, sowie Ausgänge AUS für Daten und Stellkommandos; alle diese Komponenten sind an einen internen Rechnerbus angeschlossen. Ferner gibt es kanalspezifische Datenübertragungen DÜ, über die sich die beiden Rechnerkanäle laufend über die auf ihren Bussen liegenden Daten unterrichten, sowie Hardware-Vergleicher VGL, die über schematisch angedeutete Schalter HÜ1, HÜ2 die Ausgabe von Daten auf den Übertragungskanal verhindern, wenn sie ungleiche Daten in den beiden Rechnerkanälen erkennen. In beiden Rechnern findet darüber hinaus ein Softwarevergleich der eigenen Daten mit dem von jeweils anderen Kanal übermittelten Daten statt. Beim Erkennen divergierender Daten sperrt der Rechner R1 zusätzlich zu den Hardware-Vergleichen über den symbolisch angedeuteten Kontakt SÜ die Datenausgabe auf den Übertragungskanal.

Nach der Erfindung besitzt nur der Rechnerkanal R1 einen Ausgabekanal, der von den Rechnerausgängen AUS mit Daten belegt wird. Dabei ist die Anordnung so getroffen, daß der Rechnerkanal R1 die eigentlichen Nutzdaten und der Rechnerkanal R2 die zugehörigen Prüfdaten bereitstellt. Der Rechnerkanal R1 erhält Kenntnis von den vom anderen Kanal bereitgestellten Prüfdaten durch den laufenden internen Datenaustausch zwischen den beiden Rechnerkanälen. Der Ausgabekanal wird in der Zeichnung durch eine Ausgabebaugruppe AGB symbolisiert.

Das bei der erfindungsgemäßen Einrichtung zur einkanaligen Übertragung von aus zwei Datenquellen stammenden Daten zur Anwendung kommende Verschachtelungsverfahren für die auf den Übertragungskanal zu legenden Daten ist in Figur 2 beispielhaft näher ausgeführt. Figur 2 zeigt in der oberen Zeile von den beiden Rechnerkanälen R1 und R2 gebildete Daten, die bei ordnungsgerechtem Funktionsverhalten der Rechner inhaltlich und in ihrer Darstellungsform übereinstimmen. Die Daten bestehen jeweils aus Nutzdaten N1 bzw. N2 und aus Prüfdaten P1 bzw. P2, die nach bestimmten Gesetzmäßigkeiten aus den Nutzdaten ermittelt werden. Die Prüfdaten, die in Figur 2 beliebig angenommen wurden, bestimmen sich vorzugsweise durch Anwendung kryptographischer Funktionen auf die zugehörigen Nutzdaten. Auf der jeweiligen Empfangsseite der Datenübertragungseinrichtung werden aus den übermittelten Nutzdaten nach der gleichen Verschlüsselungsfunktion wie auf der Sendeseite Prüfdaten nachgebildet und mit den übermittelten Prüfdaten verglichen. Nur bei Übereinstimmung der übermittelten und der selbst ermittelten Prüfdaten werden die zusammen mit diesen übertragenen Nutzdaten anerkannt und ggf. weiterverarbeitet oder ausgegeben.

Durch geeignete Maßnahme ist sicherzustellen, daß der Rechnerkanal R1 nicht in der Lage ist, die von ihm erarbeiteten Prüfdaten P1 auf den Übertragungskanal zu schalten. Dies kann zum Beispiel dadurch realisiert werden, daß die entsprechenden Rechnerausgänge nicht beschaltet sind. Entsprechendes gilt für die Nutzdaten des Rechnerkanals R2. Auf dem Übertragungskanal können daher entweder nur die Nutzdaten des einen und die Prüfdaten des anderen Rechnerkanals liegen oder aber im Störungsfall nur die Nutz- oder die Prüfdaten oder überhaupt keine Daten. Eine solche Störung ist empfangsseitig zuverlässig erkennbar.

Selbstverständlich ist es auch möglich, daß der Rechnerkanal R1 nicht seine eigenen Nutzdaten und die Prüfdaten des anderen Rechnerkanals auf den Übertragungskanal schaltet, sondern bei entsprechend anderer Beschaltung könnte er auch die Nutzdaten des Rechnerkanals R2 und seine eigenen Prüfdaten auf die Ausgabe-Baugruppe legen.

Eine andere Möglichkeit, die Betätigung beider Rechnerkanäle an der Ausgabe eines gemeinsamen Telegrammes zu beteiligen, besteht darin, die Nutz- und Prüfdaten beider Rechner/Rechnerkanäle ineinander zu verschachteln, beispielsweise indem der Rechner R1 die geraden und der Rechner R2 die ungeraden Bits der Prüf- und der Nutzdaten liefert. Auch hier ist durch geeignete Beschaltung sicherzustellen, daß nicht nur einer der Rechner sowohl sämtliche Nutz- als auch sämtliche Prüfdaten auf den Übertragungskanal schaltet.

Die Erfindung ist mit Vorteil auch anwendbar bei zwei von drei-Rechnersystemen, bei denen ebenfalls jeweils zwei Rechner betriebsführend sind. Unter dem Begriff Rechner/Rechnerkanäle sind jede Art von Datenverarbeitungseinrichtungen zu verstehen wie Mikrocomputer, Mikroprozessoren, PCs und Mikrocontroller.

Die erfindungsgemäße Datenübertragungseinrichtung hat nicht nur den Vorteil eines verminderten Hardwareaufwandes gegenüber einer Anordnung mit zwei Ausgabekanälen, sondern sie gestattet eine sichere Datenübertragung mit jeweils einem einzigen Datentelegramm, weil sie an der Bildung dieses Telegrammes beide Rechnerkanäle beteiligt; in einem Rechnerkanal der Sendeseite aufgetretene Fehler sind so durch Redundanzbewertung auf der Empfangsseite zuverlässig erkennbar.

## Patentansprüche

1. Einrichtung für die einkanalige, signaltechnisch sichere Übertragung von mit einem Sicherungsanhang in Form von Prüfdaten versehenen Nutzdaten, die von mindestens zwei unabhängigen, sich laufend auf Übereinstimmung vergleichenden Rechnern oder Rechnerkanälen nach gleichen Gesetzmäßigkeiten aus den gleichen Eingangsdaten gebildet werden und deren Zusammengehörigkeit empfangsseitig geprüft wird, wobei an der Bildung der mit einem Sicherungsanhang versehenen Nutzdaten jeweils beide Rechner/Rechnerkanal beteiligt sind,
**dadurch gekennzeichnet**, daß
nur einer der Rechner/Rechnerkanäle (R1) einen Ausgabekanal (ABG) aufweist und diesem die von ihm stammenden Nutz-(N1) und die vom anderen Rechner/Rechnerkanal (R2) stammenden Prüfdaten (P2) zuführt oder umgekehrt.

2. Einrichtung für die einkanalige, signaltechnisch sichere Übertragung von mit einem Sicherungsanhang in Form von Prüfdaten versehenen Nutzdaten, die von mindestens zwei unabhängigen, sich laufend auf Übereinstimmung vergleichenden Rechnern oder Rechnerkanälen nach gleichen Gesetzmäßigkeiten aus den gleichen Eingangsdaten gebildet werden und deren Zusammengehörigkeit empfangsseitig geprüft wird, wobei an der Bildung der mit einem sicherungsanhang versehenen Nutzdaten jeweils beide Rechner/Rechnerkanal beteiligt sind,
**dadurch gekennzeichnet**, daß
nur einer der Rechner/Rechnerkanäle (R1) einen Ausgabekanal (ABG) aufweist und diesem die aus beiden Rechnern/Rechnerkanälen stammenden Nutz- und Prüfdaten bitweise ineinander verschachtelt zuführt.

3. Einrichtung nach Anspruch 1 oder 2,
**dadurch gekennzeichnet**, daß
der Ausgabekanal nur an denjenigen Ausgang (AUS) der Rechner/Rechnerkanäle (R1,R2) angeschlossen ist, welcher die zu übertragenden Nutz- und Prüfdatenbits bereitstellt.

4. Einrichtung nach einem der Ansprüche 1 bis 3,
**dadurch gekennzeichnet**, daß
die Prüfdaten (P2) durch Anwendung kryptographischer Funktionen auf die zugehörigen Nutzdaten (N2) zu bestimmen sind.

## Claims

1. Device for single-channel transmission, with signal protection, of useful data which are provided with a protection attachment in the form of check data and which are formed by at least two independent computers or computer channels - which continually compare themselves in respect of correspondence - according to the same conformity to laws from the same input data and whose association is checked at the receiving end, both computers/computer channels in each case participating in the formation of the useful data which are provided with a protection attachment,
characterized in that
only one of the computers/computer channels (R1) has an output channel (ABG) and feeds to the latter the useful data (N1) originating from it and the check data (P2) originating from the other computer/computer channel (R2), or vice versa.

2. Device for single-channel transmission, with signal protection, of useful data which are provided with a protection attachment in the form of check data and which are formed by at least two independent computers or computer channels - which continually compare themselves in respect of correspondence - according to the same conformity to laws from the same input data and whose association is checked at the receiving end, both computers/computer channels in each case participating in the formation of the useful data which are provided with a protection attachment,
characterized in that
only one of the computers/computer channels (R1) has an output channel (ABG) and feeds to the latter the useful and check data originating from both computers/computer channels, bit by bit in a manner nested in one another.

3. Device according to Claim 1 or 2,
characterized in that
the output channel is only connected to that output (AUS) of the computers/computer channels (R1, R2) which provides the useful and check data bits to be transmitted.

4. Device according to one of Claims 1 to 3,
characterized in that
the check data (P2) are to be determined by applying cryptographic functions to the associated useful data (N2).

## Revendications

1. Dispositif pour la transmission monovoie, et sûre du point de vue de la technique des signaux, de données utiles, qui sont munies d'un supplément de sécurité sous la forme de données de test, qui sont formées suivant de mêmes lois à partir des mêmes données d'entrée par au moins deux ordinateurs ou voies d'ordinateurs indépendants, comparant en permanence qu'ils coïncident et dont l'appartenance commune est testée côté réception, chaque fois deux ordinateurs/voies d'ordinateurs prenant part à la formation des données utiles munies d'un supplément de sécurité, caractérisé en ce qu'un seul des ordinateurs/voies d'ordinateurs (R1) comporte une voie (ABG) de sortie et y envoie les données (N1) utiles provenant de lui et les données (P2) de test provenant de l'autre ordinateur/voie d'ordinateur (R2), ou inversement.

2. Dispositif pour la transmission monovoie, et sûre du point de vue de la technique des signaux, de données utiles, qui sont munies d'un supplément de sécurité sous la forme de données de test, qui sont formées suivant de mêmes lois à partir des mêmes données d'entrée par au moins deux ordinateurs ou voies d'ordinateurs indépendants, comparant en permanence qu'ils coïncident et dont l'appartenance commune est testée côté réception, chaque fois deux ordinateurs/voies d'ordinateurs prenant part à la formation des données utiles munies d'un supplément de sécurité, caractérisé en ce qu'un seul des ordinateurs/voies d'ordinateurs (R1) comporte une voie (ABG) de sortie et y envoie les données utiles et les données de test provenant des deux ordinateurs/voies d'ordinateurs de manière imbriquée les unes dans les autres par bits.

3. Dispositif suivant la revendication 1 ou 2, caractérisé en ce que le canal de sortie n'est raccordé qu'à la sortie (AUS) des ordinateurs/voies d'ordinateurs (R1, R2) qui met à disposition les bits de données utiles et les bits de données de test à transmettre.

4. Dispositif suivant l'une des revendications 1 à 3, caractérisé en ce que les données (P2) de test sont à déterminer par application de fonctions cryptographiques aux données (N2) utiles associées.
